# EUROPEAN PATENT APPLICATION

(11) **EP 4 793 310 A1**
(43) Date of publication of application: **19.08.2026**
(21) Application number: 24877448.1
(22) Date of filing: 30.09.2024
(51) Int. Cl.: C08J 11/02, C08L 77/00

(54) **RECYCLED POLYAMIDE RESIN COMPOSITION SEPARATED FROM WASTE FISHING NETS AND MOLDED ARTICLE COMPRISING SAME**

(30) Priority: 10.10.2023 KR 20230134299
(71) Applicant: Samyang Corporation, Jongno-gu Seoul 03129 (KR)
(72) Inventor: KWON, Soon Yong, Daejeon 34200 (KR); AN, Tae Jin, Seoul 06664 (KR); LEE, Duck Hee, Daejeon 34127 (KR); JANG, Su Hyuk, Gyeryong-si Chungcheongnam-do 32801 (KR); JEONG, Su Yeon, Anyang-si Gyeonggi-do 14125 (KR); HAN, Jung Kyu, Sejong 30092 (KR)
(74) Representative: Gleiss Große Schrell und Partner mbB
(86) International application number: PCT/KR2024/014891
(87) International publication number: WO 2025/079910

(57) **Abstract**

The present invention relates to a recycled polyamide resin composition separated from waste fishing nets and a molded article comprising same. According to the present invention, it is possible to provide an eco-friendly recycled polyamide material having excellent mechanical properties, stability, and quality while conforming to both a circular economy and carbon neutrality.

## Description

### TECHNICAL FIELD

The present invention relates to a composition of recycled polyamide resin separated from abandoned fishing net and a molded article comprising the same, and according to the present invention, it is possible to provide an eco-friendly recycled polyamide material having excellent mechanical properties, stability and quality while conforming to both the circular economy and carbon neutrality.

### BACKGROUND ART

Approximately 60% of global greenhouse gas emissions from petroleum-based plastics are generated from the extraction and processing of petroleum resources. Therefore, it is predicted that 100% replacement of virgin plastics with recycled plastics could reduce greenhouse gas emissions by about 60%.

Among recycled plastics, materials made by recycling abandoned fishing nets are expected to experience rapid growth due to their symbolic significance in marine ecosystem conservation and high value of utilizing waste sources. The proportion of abandoned fishing nets among marine waste is 7 to 10% (approximately 600,000 tons globally and 40,000 tons domestically per year), and in the case of gill nets mainly used in coastal fisheries, the proportion of polyamide is high at about 70% (about 15% for PE, about 15% for PP), the replacement is so frequent that a stable supply chain can be secured, and also the quality is relatively good because of the short period of exposure to saltwater, and thus they have high value of utilizing waste sources. It is estimated that about 15,000 tons of the gill net wastes can be collected out of approximately 40,000 tons of discarded fishing nets generated domestically per year. The recycling process for abandoned fishing nets is generally as follows: 1. Recovery of fishing nets abandoned in the sea → 2. Sorting, washing and crushing of collected nets → 3. Melting and pelletizing of crushed nets → 4. Compounding to ensure the physical properties and quality required for recycling → 5. Product application.

However, because the ocean contains diverse and large quantities of organic and inorganic materials, abandoned fishing nets themselves contain significant amounts of organic and inorganic components. Therefore, if the abandoned fishing nets as collected are recycled without proper treatment, applying such recycled materials to products leads to problems such as deterioration in physical properties and appearance quality, as well as generation of specific odors.

### CONTENTS OF THE INVENTION

### PROBLEMS TO BE SOLVED

The purpose of the present invention is to provide a a composition that utilizes abandoned fishing nets and so can provide an eco-friendly polyamide material having excellent mechanical properties, stability and quality while conforming to both the circular economy and carbon neutrality at the same time, and a molded article comprising the same.

### TECHNICAL MEANS

The first aspect of the present invention relates to a polyamide resin composition comprising: a polyamide resin component comprising a polyamide resin separated from abandoned fishing nets; and a polyvalent organic acid component comprising an aromatic organic acid having four or more carboxylic acid groups and an aliphatic organic acid having four or more carboxylic acid groups.

In an embodiment, the polyamide resin separated from the abandoned fishing nets may be nylon 6 (PA6).

In an embodiment, the amount of the polyamide resin separated from the abandoned fishing nets in the polyamide resin component may be 10 to 100 parts by weight, based on 100 parts by weight of the total polyamide resin component.

In an embodiment, the aromatic organic acid having four or more carboxylic acid groups may be pyromellitic acid.

In an embodiment, the aliphatic organic acid having four or more carboxylic acid groups may be 1,2,3,4-butanetetracarboxylic acid.

In an embodiment, the polyvalent organic acid component may comprise pyromellitic acid and 1,2,3,4-butanetetracarboxylic acid.

In an embodiment, the weight ratio of the aromatic organic acid having four or more carboxylic acid groups to the aliphatic organic acid having four or more carboxylic acid groups in the composition may be 0.1:1 to 100:1.

In an embodiment, the amount of the aromatic organic acid having four or more carboxylic acid groups in the composition may be 0.1 to 5 parts by weight, based on 100 parts by weight of the polyamide resin component.

In an embodiment, the amount of the aliphatic organic acid having four or more carboxylic acid groups in the composition may be 0.05 to 1 part by weight, based on 100 parts by weight of the polyamide resin component.

The second aspect of the present invention relates to a molded article comprising the polyamide resin composition of the present invention.

### EFFECT OF THE INVENTION

According to the present invention, it is possible to provide an eco-friendly recycled polyamide material having excellent mechanical properties, stability and quality while conforming to both the circular economy and carbon neutrality at the same time.

### CONCRETE MODE FOR CARRYING OUT THE INVENTION

The present invention is explained in more detail below.

The present invention relates to a technology for deactivating metal ions in polyamide resin separated from abandoned fishing nets containing polyamide resin, and for removing odor-causing components in the polyamide resin separated from the abandoned fishing nets.

In an embodiment, the polyamide resin may be nylon 6 (PA6).

Polyamide resins derived from abandoned fishing nets contain metal ions, and when such resins are supplied to extrusion and injection molding processes, there is a problem in that the decomposition of the polyamide resin is accelerated by the metal ions.

The decomposition mechanism of nylon 6 (PA6), one embodiment of polyamide resin, by metal ions (Me⁺) is as follows: 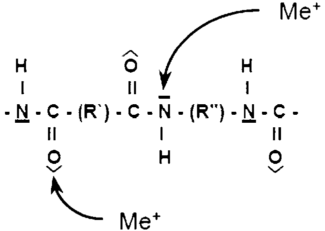 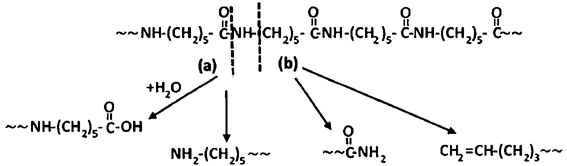
(a) Condition with H₂O
(b) Condition without H₂O

Abandoned PA6 fishing nets collected from the sea contain a much larger amount of metal ions compared to virgin PA6. Therefore, if metal ions in abandoned PA6 fishing nets collected from the sea are not deactivated, decomposition by metal ions proceeds during the extrusion and injection molding processes of recycled PA6, and as a result, the complex viscosity decreases, and if the temperature reaches 290°C, a viscosity inversion phenomenon occurs due to carbonization.

Furthermore, polyamide resins derived from abandoned fishing nets contain ammonia, which is the cause of marine waste odors, and thus there is a need to reduce the ammonia content in order to recycle such polyamide resins.

The polyamide resin composition, which is the first aspect of the present invention, comprises a polyamide resin component comprising a polyamide resin separated from abandoned fishing nets; and a polyvalent organic acid component comprising an aromatic organic acid having four or more carboxylic acid groups and an aliphatic organic acid having four or more carboxylic acid groups.

In an embodiment, the polyamide resin separated from the abandoned fishing nets may be nylon 6 (PA6).

In an embodiment, the amount of the polyamide resin separated from the abandoned fishing nets in the polyamide resin component may be 10 to 100 parts by weight, based on 100 parts by weight of the total polyamide resin component.

More specifically, the amount of the polyamide resin separated from the abandoned fishing nets in the polyamide resin component may be 10 to 100 parts by weight, 20 to 100 parts by weight, 30 to 100 parts by weight, 40 to 100 parts by weight, or 50 to 100 parts by weight, based on 100 parts by weight of the total polyamide resin component, but it is not limited thereto.

In an embodiment, if the polyamide resin component comprises a polyamide resin other than the polyamide resin separated from the abandoned fishing nets, it may be a virgin polyamide resin.

In an embodiment, the polyvalent organic acid component may comprise an aromatic organic acid having 4 to 6 (more specifically 4 to 5, even more specifically 4) carboxylic acid groups and an aliphatic organic acid having 4 to 6 (more specifically 4 to 5, even more specifically 4) carboxylic acid groups.

In an embodiment, the aromatic organic acid having four or more carboxylic acid groups may be pyromellitic acid.

### [Pyromellitic acid]

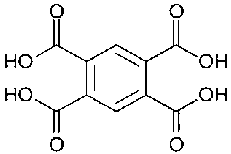

In an embodiment, the aliphatic organic acid having four or more carboxylic acid groups may be 1,2,3,4-butanetetracarboxylic acid.

### [1,2,3,4-Butanetetracarboxylic acid]

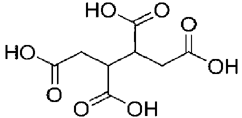

In an embodiment, the polyvalent organic acid component may comprise pyromellitic acid and 1,2,3,4-butanetetracarboxylic acid.

In an embodiment, the weight ratio of the aromatic organic acid having four or more carboxylic acid groups to the aliphatic organic acid having four or more carboxylic acid groups in the polyamide resin composition of the present invention may be 0.1:1 to 100:1.

More specifically, in the polyamide resin composition of the present invention, based on 1 part by weight of the aliphatic organic acid having 4 or more carboxylic acid groups, the aromatic organic acid having four or more carboxylic acid groups may be present in a ratio of 0.1 parts by weight or more, 0.5 parts by weight or more, 1 part by weight or more, 2 parts by weight or more, 3 parts by weight or more, 4 parts by weight or more, or 5 parts by weight or more, and it also may be present in a ratio of 100 parts by weight or less, 50 parts by weight or less, 40 parts by weight or less, 30 parts by weight or less, 20 parts by weight or less, or 10 parts by weight or less, but it is not limited thereto.

In an embodiment, the amount of the aromatic organic acid having four or more carboxylic acid groups in the polyamide resin composition of the present invention may be 0.1 to 5 parts by weight, based on 100 parts by weight of the polyamide resin component.

More specifically, the amount of the aromatic organic acid having four or more carboxylic acid groups in the polyamide resin composition of the present invention may be 0.1 part by weight or more, 0.3 part by weight or more, 0.5 part by weight or more, 0.7 part by weight or more, 0.9 part by weight or more, or 1 part by weight or more, based on 100 parts by weight of the polyamide resin component, and it also may be 5 parts by weight or less, 4.5 parts by weight or less, 4 parts by weight or less, 3.5 parts by weight or less, 3 parts by weight or less, or 2.5 parts by weight or less, but it is not limited thereto.

In an embodiment, the amount of the aliphatic organic acid having four or more carboxylic acid groups in the composition may be 0.05 to 1 part by weight, based on 100 parts by weight of the polyamide resin component.

More specifically, the amount of the aliphatic organic acid having four or more carboxylic acid groups in the polyamide resin composition of the present invention may be 0.05 part by weight or more, 0.06 part by weight or more, 0.07 part by weight or more, 0.08 part by weight or more, 0.09 part by weight or more, or 0.1 part by weight or more, based on 100 parts by weight of the polyamide resin component, and it also may be 1 part by weight or less, 0.9 part by weight or less, 0.8 part by weight or less, 0.7 part by weight or less, 0.6 part by weight or less, or 0.5 part by weight or less, but it is not limited thereto.

In addition to the above-explained components, the polyamide resin composition of the present invention may further comprise one or more of other additive components commonly used in polyamide resin compositions, as needed.

In an embodiment, such an additive may be selected from antioxidants, release agents, colorants, inorganic fillers, heat stabilizers, and combinations thereof, but it is not limited thereto, and the amount of each additive may be appropriately selected, for example, within a range of 0.1 to 5 parts by weight based on 100 parts by weight of the polyamide resin component, but it is not limited thereto.

Although not limited thereto, in an embodiment, the polyamide resin composition of the present invention may exhibit a tensile strength of 65 MPa or more, a flexural strength of 85 MPa or more, a flexural modulus of 2400 MPa or more, an impact strength of 4.5 J/m or more, a heat distortion temperature of 60°C or higher, a melt index of 45 to 75 g/min, a total metal ion content of 400 ppm or less, and/or an ammonia content of 100 ppm or less.

As such, the polyamide resin composition of the present invention is an eco-friendly recycled polyamide material with excellent mechanical properties and processability as compared with the existing polyamide resin compositions recycled from abandoned fishing nets, and excellent stability as it does not decompose during extrusion and injection molding processes due to its low metal ion content, and high quality due to reduced odor-causing components, and therefore it can be applied to various uses such as automotive interior/exterior parts, electrical/electronic components, and housing parts.

Accordingly, another aspect of the present invention provides a molded article comprising the polyamide resin composition of the present invention.

The method of preparing the molded article using the polyamide resin composition of the present invention is not particularly limited, and any method generally used for preparing resin molded articles (e.g., extrusion or injection, etc.) may be used as is or appropriately modified.

The present invention is explained in more detail through the following Examples and Comparative Examples. However, the scope of the present invention is not limited thereby in any manner.

### EXAMPLES

### Examples 1 to 8 and Comparative Examples 1 to 10

The resin compositions of each example and comparative example were prepared with the compositions shown in Tables 1 and 2 below.

### [Explanation on the components used]

PA6 1: Virgin polyamide-6 (1027BRT (Hyosung))
PA6 2: Recycled polyamide-6 derived from abandoned fishing nets (BlueAmide)
PA6 3: Recycled polyamide-6 derived from abandoned fishing nets (R-PA6 BR)
PA6 4: Recycled polyamide-6 derived from abandoned fishing nets (RA6-G00)
Antioxidant 1: Tris(2,4-di-tert-butylphenyl)phosphite (IRGANOX 168, BASF)
Antioxidant 2: Hydrocinnamamide (IRGANOX 1098, BASF)
Antioxidant 3: Hindered phenol-based antioxidant (AO-60, ADEKA)
Release agent: N,N'-Ethylene bisstearamide (HI-Lub, SINWON CHEMICAL)
Colorant: Carbon black (BK-A)
Inorganic filler: Talc (KC2000C, Koch)
Heat stabilizer: BRUGGOLEN H320 (Brueggmann)
Polyvalent organic acid 1: Pyromellitic acid
Polyvalent organic acid 2: 1,2,3,4-Butanetetracarboxylic acid
Polyvalent organic acid 3: Tricarballylic Acid
Polyvalent organic acid 4: Citric acid

For each resin composition of the examples and comparative examples, measurements and evaluations were performed on the following items, and the results are shown in Table 1 and Table 2 below.

### [Methods of measurement and evaluation]

### (1) Tensile strength

Measured according to ASTM D638.

### (2) Flexural strength and flexural modulus

Measured according to ASTM D790.

### (3) Impact strength

Measured according to ASTM D256 (1/8 inch thickness, notch-Izod).

### (4) Heat distortion temperature

Measured according to ASTM D648 under a load of 18.6 kg/cm²

### (5) Melt index

Measured according to ASTM D1238 under a temperature of 300°C and a load of 1.2 kgf

### (6) Residual metal ion analysis

The total residual metal ion content (unit: ppm) in the composition sample was measured through an inductively coupled plasma (ICP) ion analysis.

### (7) Ammonia analysis

The residual ammonia content in the composition sample was measured by applying Technology Odor Process Test Standard of the National Institute of Standards, ES 09302.1a-Ammonia (boric acid solution absorption method-ultraviolet/visible spectroscopy).

### (8) Evaluation of processability

During the extrusion and injection molding processes using the composition, processability was measured by comprehensively evaluating pressure, speed, injection time, cooling time, and the appearance of the molded product during the injection molding process. Specifically, if one or more of the following reasons for poor processability were present, the processability was judged to be "poor," and if none of the following reasons for poor processability were present, the processability was judged to be "good."

### <Reasons for poor processability>

- Generation of abnormal pressure by 20% or more greater than the standard injection pressure (100 MPa)
- Generation of abnormal speed by 20% or more greater than the standard injection speed (50%)
- Generation of time delay by 20% or more greater than the standard injection time (10 seconds) and cooling time (20 seconds)
- Surface defects, incomplete molding, or overmolding of the injection specimen

**[Table 1]**

| **Components** | **Example (amount unit: part by weight)** | | | | | | | |
|---|---|---|---|---|---|---|---|---|
| | 1 | 2 | 3 | 4 | 5 | 6 | 7 | 8 |
| PA6 1 | | | 50 | 50 | 80 | 20 | 50 | 50 |
| PA6 2 | 100 | 100 | 50 | 50 | 20 | 80 | | |
| PA6 3 | | | | | | | 50 | |
| PA6 4 | | | | | | | | 50 |
| Antioxidant 1 | 0.2 | 0.2 | 0.2 | 0.2 | 0.2 | 0.2 | 0.2 | 0.2 |
| Antioxidant 2 | 0.2 | 0.2 | 0.2 | 0.2 | 0.2 | 0.2 | 0.2 | 0.2 |
| Release agent | 0.1 | 0.1 | 0.1 | 0.1 | 0.1 | 0.1 | 0.1 | 0.1 |
| Colorant | 1 | 1 | 1 | 1 | 1 | 1 | 1 | 1 |
| Inorganic filler | 0.3 | 0.3 | 0.3 | 0.3 | 0.3 | 0.3 | 0.3 | 0.3 |
| Heat stabilizer | 0.1 | 0.1 | 0.1 | 0.1 | 0.1 | 0.1 | 0.1 | 0.1 |
| Antioxidant 3 | 0.3 | 0.3 | 0.3 | 0.3 | 0.3 | 0.3 | 0.3 | 0.3 |
| Polyvalent organic acid 1 | 1 | 2.5 | 1 | 2.5 | 2.5 | 2.5 | 2.5 | 2.5 |
| Polyvalent organic acid 2 | 0.1 | 0.5 | 0.1 | 0.5 | 0.5 | 0.5 | 0.5 | 0.5 |

**[Table 1] (continued)**

| **Properties** | **Example** | | | | | | | |
|---|---|---|---|---|---|---|---|---|
| | 1 | 2 | 3 | 4 | 5 | 6 | 7 | 8 |
| Tensile strength (MPa) | 68.5 | 69.4 | 72.7 | 73.8 | 75.5 | 71.4 | 67.5 | 78.4 |
| Flexural strength (MPa) | 88.3 | 90.3 | 91.5 | 92.1 | 92.3 | 91.1 | 87.4 | 92.3 |
| Flexural modulus (MPa) | 2430 | 2540 | 2485 | 2510 | 2585 | 2515 | 2440 | 2590 |
| Impact strength (J/m) | 4.5 | 5 | 5.1 | 5.4 | 5.7 | 5.4 | 4.8 | 5.1 |
| Heat distortion temperature (°C) | 61 | 62 | 62 | 62 | 63 | 61 | 60 | 64 |
| Melt index (g/min.) | 75 | 68 | 58 | 56 | 51 | 62 | 75 | 45 |
| Total residual metal ion content (ppm) | 321 | 294 | 278 | 269 | 266 | 305 | 385 | 221 |
| Ammonia content (ppm) | 73 | 68 | 65 | 61 | 62 | 70 | 85 | 55 |
| Processability | Good | Good | Good | Good | Good | Good | Good | Good |

**[Table 2]**

| **Components** | **Comparative Example (amount unit: part by weight)** | | | | | | | | | |
|---|---|---|---|---|---|---|---|---|---|---|
| | 1 | 2 | 3 | 4 | 5 | 6 | 7 | 8 | 9 | 10 |
| PA6 1 | | | 50 | 50 | 50 | 50 | 50 | 50 | 50 | 50 |
| PA6 2 | 100 | 100 | 50 | 50 | 50 | 50 | 50 | 50 | | |
| PA6 3 | | | | | | | | | 50 | |
| PA6 4 | | | | | | | | | | 50 |
| Antioxidant 1 | 0.2 | 0.2 | 0.2 | 0.2 | 0.2 | 0.2 | 0.2 | 0.2 | 0.2 | 0.2 |
| Antioxidant 2 | 0.2 | 0.2 | 0.2 | 0.2 | 0.2 | 0.2 | 0.2 | 0.2 | 0.2 | 0.2 |
| Release agent | 0.1 | 0.1 | 0.1 | 0.1 | 0.1 | 0.1 | 0.1 | 0.1 | 0.1 | 0.1 |
| Colorant | 1 | 1 | 1 | 1 | 1 | 1 | 1 | 1 | 1 | 1 |
| Inorganic filler | 0.3 | 0.3 | 0.3 | 0.3 | 0.3 | 0.3 | 0.3 | 0.3 | 0.3 | 0.3 |
| Heat stabilizer | 0.1 | 0.1 | 0.1 | 0.1 | 0.1 | 0.1 | 0.1 | 0.1 | 0.1 | 0.1 |
| Antioxidant 3 | 0.3 | 0.3 | 0.3 | 0.3 | 0.3 | 0.3 | 0.3 | 0.3 | 0.3 | 0.3 |
| Polyvalent organic acid 1 | | 5 | | 1 | | | | | | |
| Polyvalent organic acid 2 | | | | | 0.1 | 0.1 | 0.1 | 0.1 | 0.1 | 0.1 |
| Polyvalent organic acid 3 | | | | | | 2.5 | | 1 | | |
| Polyvalent organic acid 4 | | | | | | | 2.5 | 1 | 2.5 | 2.5 |

**[Table 2] (continued)**

| **Properties** | **Comparative Example** | | | | | | | | | |
|---|---|---|---|---|---|---|---|---|---|---|
| | 1 | 2 | 3 | 4 | 5 | 6 | 7 | 8 | 9 | 10 |
| Tensile strength (MPa) | 66.4 | 55.8 | 70.4 | 73.4 | 70.8 | 71.4 | 55.2 | 66.1 | 48.5 | 70.5 |
| Flexural strength (MPa) | 85.3 | 80.3 | 90.5 | 90.7 | 88.7 | 88.5 | 78.5 | 80.5 | 71.4 | 85.4 |
| Flexural modulus (MPa) | 2400 | 2250 | 2425 | 2450 | 2380 | 2450 | 2245 | 2420 | 2158 | 2355 |
| Impact strength (J/m) | 4.1 | 3.8 | 4.8 | 5 | 4.7 | 4.1 | 3.3 | 4.1 | 3.5 | 4.5 |
| Heat distortion temperature (°C) | 60 | 58 | 60 | 61 | 60 | 61 | 55 | 58 | 54 | 61 |
| Melt index (g/min.) | 82 | 99 | 67 | 57 | 62 | 65 | 99 | 85 | 99 | 35 |
| Total residual metal ion content (ppm) | 443 | 385 | 800 | 550 | 650 | 365 | 295 | 315 | 800 | 285 |
| Ammonia content (ppm) | 110 | 83 | 300 | 94 | 120 | 80 | 65 | 84 | 125 | 59 |
| Processability | Good | Good | Good | Good | Good | Good | Poor | Good | Poor | Poor |

As can be seen from the results in Tables 1 and 2 above, the polyamide resin compositions of Examples according to the present invention had excellent mechanical properties and processability, and low metal ion content and odor-causing component content, whereas the polyamide resin compositions of Comparative Examples were inferior to those of Examples in one or more of the above evaluation items.

## Claims

1. A polyamide resin composition comprising:
a polyamide resin component comprising a polyamide resin separated from abandoned fishing nets; and
a polyvalent organic acid component comprising an aromatic organic acid having four or more carboxylic acid groups and an aliphatic organic acid having four or more carboxylic acid groups.

2. The polyamide resin composition of claim 1, wherein the polyamide resin separated from the abandoned fishing nets is nylon 6 (PA6).

3. The polyamide resin composition of claim 1, wherein the amount of the polyamide resin separated from the abandoned fishing nets in the polyamide resin component is 10 to 100 parts by weight, based on 100 parts by weight of the total polyamide resin component.

4. The polyamide resin composition of claim 1, wherein the aromatic organic acid having four or more carboxylic acid groups is pyromellitic acid.

5. The polyamide resin composition of claim 1, wherein the aliphatic organic acid having four or more carboxylic acid groups is 1,2,3,4-butanetetracarboxylic acid.

6. The polyamide resin composition of claim 1, wherein the polyvalent organic acid component comprises pyromellitic acid and 1,2,3,4-butanetetracarboxylic acid.

7. The polyamide resin composition of claim 1, wherein the weight ratio of the aromatic organic acid having four or more carboxylic acid groups to the aliphatic organic acid having four or more carboxylic acid groups in the composition is 0.1:1 to 100:1.

8. The polyamide resin composition of claim 1, wherein the amount of the aromatic organic acid having four or more carboxylic acid groups in the composition is 0.1 to 5 parts by weight, based on 100 parts by weight of the polyamide resin component.

9. The polyamide resin composition of claim 1, wherein the amount of the aliphatic organic acid having four or more carboxylic acid groups in the composition is 0.05 to 1 part by weight, based on 100 parts by weight of the polyamide resin component.

10. A molded article comprising the polyamide resin composition of any one of claims 1 to 9.
